# EUROPEAN PATENT SPECIFICATION

(11) **EP 1 467 631 B1**
(45) Date of publication and mention of the grant of the patent: **27.09.2006**
(21) Application number: 03701538.5
(22) Date of filing: 23.01.2003
(51) Int. Cl.: A23L 1/0522, A23L 1/39

(54) **STARCH N-ALKENYL SUCCINATE AS TEXTURISING AGENT FOR UHT TREATED PRODUCTS**
N-ALKENYL BERNSTEINSÄURE-STÄRKEESTER ALS TEXTURSMITTEL FÜR UHT PRODUKTE
SUCCINATE DE N-ALCENYLE D'AMIDON UTILISE EN TANT QU'AGENT DE TEXTURE POUR DES PRODUITS AYANT SUBI UN TRAITEMENT UHT

(30) Priority: 24.01.2002 GB 0201552
(43) Date of publication of application: 20.10.2004
(73) Proprietor: Cerestar Holding B.V., 4551 LA Sas Van Gent (NL)
(72) Inventor: SIPS, Nils, Cornelis, Adrianus, Petrus, NL-6041 VC Roermond (NL); KETTLITZ, Bernd, Wolfgang, B-2820 Bonheiden (BE)
(74) Representative: Wilkinson, Stephen John
(86) International application number: PCT/EP2003/000668
(87) International publication number: WO 2003/061404

(56) References cited:
- EP-A- 0 537 126
- EP-A- 0 811 633
- EP-A- 0 966 889
- EP-A- 1 008 306
- EP-A- 1 057 416
- US-A- 4 414 238
- US-A- 4 670 268
- US-A- 5 919 512
- US-A- 6 077 558
- STATUTORY INSTRUMENT 1995 NO.3187, [Online] XP002214611 Retrieved from the Internet: <URL:http://www.hmso.gov.uk/si/si1995/Uksi _19953187_en_9.htm> [retrieved on 2002-09-24]
- DATABASE WPI Section Ch, Week 200148 Derwent Publications Ltd., London, GB; Class D13, AN 2001-446138 XP002214612 & JP 2001 149037 A (QP CORP), 5 June 2001 (2001-06-05)
- DATABASE WPI Section Ch, Week 200223 Derwent Publications Ltd., London, GB; Class D13, AN 2002-174509 XP002214613 & JP 2001 309761 A (QP CORP), 6 November 2001 (2001-11-06)
- DATABASE WPI Section Ch, Week 200233 Derwent Publications Ltd., London, GB; Class D13, AN 2002-287120 XP002214614 & JP 2002 000243 A (KANEKA CORP), 8 January 2002 (2002-01-08)

## Description

### Technical field

The present invention relates to UHT -treated products comprising starch n-alkenyl succinate wherein starch n-alkenyl succinate is texturising agent and viscosity of UHT-treated product is significant lower than viscosity of re-heated UHT-treated product.

### Background of the invention

Modified starches such as starch octenyl succinate have been applied in different applications.

EP 0 537 126 relates to manufacture of low calorie margarine having an extra low fat content. An acid-hydrolysed starch further stabilised with for example octenylic-succinylic groups can be used to completely eliminate the need of using a monoglyceride emulsifier.

US 6,077,558 relates to an alternative emulsifying system for elemental diet compositions and said emulsifying system is comprising octenyl succinic anhydride modified starch and an acetylated monoglyceride emulsifier.

US 4,414,238 is concerned with a nutritionally balanced food composition and specifically with ready-to-use liquid elemental diet which is non-browning at elevated temperature. The liquid elemental diet composition comprises an aqueous combination of carbohydrate, amino acids and lipid components. Stability of said composition is enhanced by the inclusion of a modified starch, e.g waxy maize starch which has been modified with succinic anhydride.

US 5,919,512 relates to beverages that have stable flavour emulsions and/or cloud emulsions in the presence of polyphosphate containing preservative systems. Suitable emulsifiers include gum acacia, modified food starches (e.g. alkenylsuccinate modified food starch).

EP 1 008 306 relates to polysaccharides when can reduce viscosity resulting from psyllium. Modified starches, which give excellent psyllium viscosity-reducing effect, may include oxidised tapioca starch, oxidised potato starch, acid-treated gelatinised potato starch, waxy corn starch octenyl succinate and acid-treated hydroxypropyl etherified tapioca starch.

EP 0 966 889 relates to powder compositions and emulsion compositions useful to produce nutritious vitamin and mineral supplemented beverages which contain vitamin E and other fat soluble vitamins. Starch treated with cyclic dicarboxylic acid such as succinic anhydrides can be applied as good emulsifier.

EP 1 057 416 provides a soluble isoflavone composition which has high solubility in water, which is stable over a long time period and can be incorporated into various kinds of foods without changing characteristic properties peculiar thereto. There is provided a soluble isoflavone composition which comprises isoflavone and anhydrous or water-containing propylene glycol and/or ocetenyl succinate-treated starch as solubilising agent.

According to Statutory Instrument 1995 No. 3187, modified starches such as hydroxypropyl distarch phosphate, acetylated distarch adipate and starch sodium octenyl succinate are recognised as additives for use in sterilised, pasteurised and UHT cream, low-calorie cream and pasteurised low fat cream.

The last decades eating habits have put more stress upon availability of convenience food. Thermal processes, such as UHT (ultra-high-temperature) treatment, have grown in importance for preparing convenience food.

WO 94/0437 describes a bakery custard comprising a UHT-stable starch. Said UHT-stable starch is either acetylated distarch adipate or hydroxypropyl distarch phosphate.

Currently there exists a need for a UHT-treated product wherein the texturising agent develops no viscosity during UHT treatment, but full viscosity is developed during a second heating treatment, while afterwards there is no significant change in this viscosity.

The current invention provides such a product.

### Summary of the invention

The present invention relates to a UHT-treated product comprising starch n-alkenyl succinate as texturising agent and wherein said starch n-alkenyl succinate is stabilised by treatment with active chlorine and wherein the viscosity of said UHT-treated product is between 0.10 to 0.50 times the viscosity obtainable after re-heating of said UHT-treated product, preferably between 0.15 to 0.40 times the viscosity obtainable after re-heating.

The present invention further relates to a UHT-treated product comprising stabilised starch n-alkenyl succinate as texturising agent and said UHT-treated product has after UHT-treatment a viscosity which is between 0.15 to 0.35 times the viscosity obtainable after re-heating of said UHT-treated product.

The present invention relates to a UHT-treated product selected from the group consisting of UHT-treated sauces, soups, liquid desserts, dressings and fillings.

Furthermore, the present invention relates to a UHT-treated white sauce comprising from 2 to 5% w/w stabilised starch n-alkenyl succinate, preferably from 3 to 4% w/w stabilised starch n-alkenyl succinate, and its viscosity after UHT treatment is below 1500 mPa.s, preferably below 1000 mPa.s, whereas after reheating the UHT-treated product, the viscosity increases to above 2000 mPa.s, preferably to above 2200 mPa.s.

The present invention further relates to a process for preparing UHT-treated product comprising starch n-alkenyl succinate stabilised by treatment with active chlorine, which process comprises the following steps:
a) preparing the mix of the ingredients comprising the stabilised starch n-alkenyl succinate,
b) preheating said mix to a temperature higher than 50°C, preferably to a temperature up to 75°C,
c) homogenising said preheated mix at a pressure of more than 20 bar,
d) treating the mix by UHT at a temperature higher than 120°C, and
e) cooling the UHT-treated product.

The present invention relates to a process wherein the UHT-treated product to step e) is reheated to a temperature higher than 80°C, preferably higher than 90°C.

The current invention further relates to the use of the stabilised starch n-alkenyl succinate as texturising agent in a UHT-treated product wherein the viscosity of said UHT-treated product is between 0.10 to 0.50 times the viscosity obtainable after re-heating of said UHT-treated product.

The current invention further relates to the use in UHT-treated products selected from the group consisting of sauces, soups, liquid desserts, dressings and fillings.

Furthermore, the present invention describes the use of starch n-alkenyl succinate as texturising agent in UHT-treated product wherein egg yolk content of said product is reduced by at least 50% by adding stabilised starch n-alkenyl succinate.

### Detailed description of the invention

The present invention relates to a UHT-treated product comprising starch n-alkenyl succinate as texturising agent wherein said starch n-alkenyl succinate is starch n-alkenyl succinate stabilised by treatment with active chlorine and wherein said UHT-treated product has after UHT-treatment a viscosity which is between 0.10 to 0.50 times the viscosity obtainable after re-heating of said UHT-treated product, preferably between 0.15 to 0.40 times the viscosity obtainable after re-heating.

The starch used in the present invention may be from a variety of sources such as corn, waxy maize, potato, pea, rice, wheat, cassava (tapioca), sorghum, and the like, preferably waxy maize and tapioca.

The starch n-alkenyl succinate is characterised by the chain length of the alkenyl-group and by the substitution degree of n-alkenyl succinate on starch. Alkenyl can be from C₆ to C₁₆, preferably C₈ (octenyl), and the substitution degree varies between 0.2 to 3%, preferably between 0.5 to 2.5%. This substitution degree is determined by HPLC.

The starch alkenyl succinate is undextrinised, dextrinised, cooked-up or pregelatinised, enzyme-treated or stabilised and/or mixtures thereof.

By the term "stabilised starch n-alkenyl succinate" we mean starch n-alkenyl succinate treated with active chlorine, which may be prepared according to the process described in EP 0811633.

The present invention further relates to a UHT-treated product wherein the starch n-alkenyl succinate is starch n-octenyl succinate and in a specific example starch is treated with n-octenyl succinic anhydride followed by the treatment with hypochlorite in an amount equivalent to 100 to 2000 ppm active chlorine and a stabilised starch n-octenyl succinate is obtained.

Ultra-high-temperature (UHT) treatment enables sterility to be achieved with minimal chemical change to the product.

Two methods of heat treatment are principally used in UHT processing: indirect heating, using hot water or steam, and direct heating, using steam.

Indirect heating systems are usually based on plate heat exchangers, tubular heat exchangers or scraped-surface heat exchangers.

Direct heat-exchangers use steam for product sterilisation. With the injection or steam-into-product system, a steam injector is used to introduce bubbles of steam into the product flow. The steam, at a higher temperature than the product, condenses to raise the product temperature to that required for sterilisation.

An alternative to the injection system is the infusion or product-into-steam system. This is based on a steam pressure vessel with an infuser at the top and a conical base. Product passes through the steam atmosphere into the collecting cone. As the product falls, the temperature is raised through the contact with the steam. The heated product is then pumped through the holding tube into an expansion vessel for water removal and cooling. The type and lay-out of a UHT process will vary according to the products and requirements.

Surprisingly it is found by the current invention that products comprising stabilised starch n-alkenyl succinate, after UHT-treatment still have low viscosity. After UHT-treatment the viscosity is only between 0.10 to 0.50 times the viscosity obtainable after re-heating of said UHT-treated product. During the re-heating step, full viscosity of the product is developed and said viscosity remains stable after cooling and during storage of the product.

In particular, the current invention relates to a UHT-treated product which comprises a stabilised starch n-alkenyl succinate as texturising agent and said UHT-treated product has after UHT-treatment a viscosity which is between 0.15 to 0.35 times the viscosity obtainable after re-heating of said UHT-treated product.

In comparison, currently existing starch-based products used for UHT-treatment, such as acetylated distarch adipate or hydroxypropyl distarch phosphate, develop directly full viscosity during UHT-treatment and said viscosity increases further during the second heating step and during storage the viscosity is not stable.

The current invention discloses UHT-treated products selected from the group consisting of UHT-treated sauces, soups, liquid desserts, dressings and fillings.

In particular, the present invention relates to a UHT-treated white sauce comprising from 2 to 5% w/w stabilised starch n-alkenyl succinate, preferably from 3 to 4% w/w stabilised starch n-alkenyl succinate, and its viscosity after UHT. treatment is below 1500 mPa.s, preferably below 1000 mPa.s, whereas during re-heating viscosity increases to above 2000 mPa.s, preferably to above 2200 mPa.s.

It is very important that during the heating of the UHT-treatment the texturising agent does not develop viscosity and that the starch granule is not damaged during this heating and shear process. This is a very striking difference from other starch-based texturising agents for UHT-products. The comparative example clearly demonstrates that hydroxypropylated distarch phosphate (tapioca based) already has significant increase of viscosity during UHT treatment, whereas UHT-treated products comprising stabilised starch n-octenyl succinate as texturising agent have low viscosity after UHT-treatment (example 1). When heating the product for a second time, then full viscosity is developed and after cooling and during storage there is no post-thickening effect observed for the UHT-treated product comprising starch n-octenyl succinate.

In fact, the current invention allows the preparation of UHT-treated products which are still liquid after said treatment, and which develop full viscosity only during a second heating step. In particular, the viscosity of the UHT-treated product after UHT-treatment and the viscosity obtained after re-heating differs by at least 1800 mPa.s, and differences of up to 2900 mPa.s are observed.

The present invention further relates to a process for preparing UHT-treated product comprising stabilised starch n-alkenyl succinate which process comprises the following steps:
a) preparing the mix of the ingredients comprising the stabilised starch n-alkenyl succinate,
b) preheating said mix to a temperature higher than 50°C, preferably to a temperature up to 75°C,
c) homogenising said preheated mix at a pressure higher than 20 bar,
d) treating the mix by UHT at a temperature higher than 120°C, and
e) cooling the UHT-treated product.

The process steps c) and d) may occur either in sequence or simultaneously.

The process can be based on direct or indirect heating. Whichever method is used, the process is broadly the same, with the heat treatment being followed by aseptic storage and aseptic packing of the product.

The current invention further relates to the use of stabilised starch n-alkenyl succinate as texturising agent in UHT-treated products. These UHT-treated products are selected from the group consisting of sauces, soups, liquid desserts, dressings and fillings. The use of stabilised starch n-alkenyl succinate, especially stabilised starch n-octenyl succinate, as texturising agents in UHT-treated products gives products with low viscosity after the UHT process but which develop full viscosity when re-heated, while no post-thickening during storage occurs. Such a post-thickening effect is observed with the products currently in use for UHT-treatment (see comparative example). These existing products also lack the advantage of the current invention that, after UHT-treatment, the products still have low viscosity. In fact, the UHT-treated products of the current invention are characterised in that the texturising agent gives after UHT-treatment a viscosity which is only between 0.10 to 0.50 times the viscosity obtainable after re-heating of the UHT-treated product.

The current invention especially relates to the use of stabilised starch n-alkenyl succinate in UHT-treated products wherein at least 50% of egg yolk content is reduced by adding stabilised starch n-alkenyl succinate. Example 1 trial T2 clearly demonstrates that the egg yolk content of a product with normal egg yolk-content of 1.5% can be reduced to 0.75% by having stabilised starch n-octenyl succinate present in the product. Said product has acceptable texture and taste, and is comparable with the product containing normal egg content levels. By applying stabilised starch n-octenyl succinate as texturising agent in UHT-treated products, it partially can replace egg yolk in the finished product and consequently the cholesterol content is significantly reduced.

The UHT-treated product of the current invention has the following advantages:
➢ Low viscosity during UHT-heating, i.e. the product remains very liquid and there is no thickening during UHT treatment
➢ Starch granule is not damaged during this heat treatment and shear treatment at high temperature
➢ Thickening, i.e. development of viscosity is obtained in a second heating step
➢ Full viscosity remains stable during cooling and storage and there is no post-thickening effect
➢ Lower cholesterol content

The invention is illustrated by way of the following example.

Example 1 demonstrates that UHT-treated white sauce comprising stabilised starch n-octenyl succinate has low viscosity after said treatment, but viscosity is developed in a second heating step. Additionally it is demonstrated that similar results are obtainable when stabilised starch n-octenyl succinate is applied as texturising agent and as replacement for 50% of egg yolk content in UHT-treated white sauce.

The comparative example demonstrates that hydroyxpropylated tapioca diphosphate already during UHT-treatment develops its viscosity and that during second heating step viscosity is increased further and post-thickening effect is observed.

### Example 1.

UHT-treated white sauce was prepared by applying the following recipe.
Recipe:

| Ingredients (percentage) | T1 | T2 -reduced egg content |
|---|---|---|
| Soya oil | 10 | 10 |
| Skimmed milk | 4 | 4 |
| Egg yolk | 1.5 | 0.75 (= 50% of egg yolk) |
| nOSA highly stabilised tapioca starch | 3 | 4 |
| Water | 81.5 | 81.5 |

nOSA highly stabilised tapioca starch is obtainable from Cerestar.

The following UHT-treatment (APV pilot plant) was applied:

| | |
|---|---|
| Preheating: | 75°C |
| Homogenisation: | 25 bar |
| Heating: | 138 -140°C for 10 sec (tubular system) |
| Cooling: | max. |

The second heating was performed with Janke & Kunkel equipment and products were heated up to 95°C for 1 minute.
The products were characterised by their Brookfield viscosity (cyl. Spindle at 20 rpm and 20°C).
The obtained results are displayed in Table 1.

**Table 1:**

| Brookfield viscosity (in mPa.s) | T1 | T2 |
|---|---|---|
| 1 day after UHT-treatment | | |
| Before re-heating | 600 | 1300 |
| After re-heating | 2400 | 4200 |

| 1 week after UHT-treatment | | |
|---|---|---|
| Before re-heating | 700 | 1300 |
| After re-heating | 2500 | 4000 |

| 1 month after UHT-treatment | | |
|---|---|---|
| Before re-heating | 500 | 1300 |
| After re-heating | 2900 | 4400 |

| 3 months after UHT-treatment | | |
|---|---|---|
| Before re-heating | 700 | 1700 |
| After re-heating | 3600 | 4900 |

The products have low viscosity after UHT-treatment and high viscosity after second heating step. This is also applicable for products with reduced egg yolk content (see T2).

### Comparative example

UHT-treated white sauce was prepared by applying hydroxypropylated tapioca diphosphate (C☆CreamTex 75705 obtained from Cerestar) and by applying the following recipe:
Recipe:

| Ingredients (percentage) | Reference |
|---|---|
| Soya oil | 10 |
| Skimmed milk | 4 |
| Egg yolk | 1.5 |
| C☆CreamTex 75705 (Cerestar) | 3 |
| Water | 81.5 |

The product was treated according to the parameters of example 1. The obtained Brookfield viscosities are given in Table 2.

**Table 2**

| Brookfield viscosity (in mPa.s) | Reference |
|---|---|
| 1 day after UHT-treatment | |
| Before re-heating | 4000 |
| After re-heating | 4800 |

| 1 week after UHT-treatment | |
|---|---|
| Before re-heating | 3900 |
| After re-heating | 4800 |

| 1 month after UHT-treatment | |
|---|---|
| Before re-heating | 4500 |
| After re-heating | 4700 |

| 3 months after UHT-treatment | |
|---|---|
| Before re-heating | 4000 |
| After re-heating | 4300 |

These products already have developed viscosity during UHT-treatment and afterwards during second heating there is further increase of viscosity.

## Claims

1. A UHT-treated product comprising starch n-alkenyl succinate as texturising agent **characterised in that** said starch n-alkenyl succinate is starch n-alkenyl succinate stabilised by treatment with active chlorine and the viscosity of said UHT-treated product is between 0.10 to 0.50 times the viscosity of re-heated UHT-treated product.

2. A UHT-treated product according to claim 1, **characterised in that** the viscosity of said UHT-treated product is between 0.15 to 0.40 times the viscosity of re-heated UHT-treated product.

3. A UHT-treated product according to claim 1, **characterised in that** viscosity of said UHT-treated product is between 0.15 to 0.35 times the viscosity of re-heated UHT-treated product.

4. A UHT-treated product according to any one of claims 1 to 3, **characterised in that** said product is selected from the group consisting of UHT-treated sauces, soups, liquid desserts, dressings and fillings.

5. A UHT-treated product according to claim 4 which is a UHT-treated white sauce **characterised in that**:
a) it comprises from 2 to 5% w/w stabilised starch n-alkenyl succinate, preferably from 3 to 4% w/w stabilised starch n-alkenyl succinate,
b) its viscosity after UHT treatment is below 1500 mPa.s, preferably below 1000 mPa.s,
c) its viscosity after re-heating increases to above 2000 mPa.s, preferably to above 2200 mPa.s.

6. A process for preparing UHT-treated product comprising starch n-alkenyl succinate stabilised by treatment with active chlorine which process comprises the following steps:
a) preparing the mix of the ingredients,
b) preheating said mix to a temperature higher than 50°C, preferably to a temperature up to 75°C,
c) homogenising said preheated mix at a pressure higher than 20 bar,
d) treating the mix by UHT at a temperature higher than 120°C, and
e) cooling of UHT-treated product.

7. A process according to claim 6, **characterised in that** the UHT-treated product of step e) is re-heated to a temperature higher than 80°C, preferably higher than 90°C.

8. Use of starch n-alkenyl succinate stabilised by treatment with active chlorine as a texturising agent in a UHT-treated product and **characterised in that** the viscosity of UHT-treated product is between 0.10 to 0.50 times the viscosity of re-heated UHT-treated product.

9. Use according to claim 8, **characterised in that** said UHT-treated product is selected from the group consisting of sauces, soups, liquid desserts, dressings and fillings.

## Patentansprüche

1. UHT-behandeltes Produkt, umfassend Stärke-n-alkenylsuccinat als Texturierungsmittel, **dadurch gekennzeichnet, daß** das Stärke-n-alkenylsuccinat Stärke-n-alkenylsuccinat ist, das durch die Behandlung mit Aktivchlor stabilisiert ist, und die Viskosität des UHT-behandelten Produktes zwischen dem 0,10- und 0,50fachen der Viskosität des erneut erhitzten UHT-behandelten Produktes liegt.

2. UHT-behandeltes Produkt nach Anspruch 1, **dadurch gekennzeichnet, daß** die Viskosität des UHT-behandelten Produktes zwischen dem 0,15- und 0,40fachen der Viskosität des erneut erhitzten UHT-behandelten Produktes liegt.

3. UHT-behandeltes Produkt nach Anspruch 1, **dadurch gekennzeichnet, daß** die Viskosität des UHT-behandelten Produktes zwischen dem 0,15- und 0,35fachen der Viskosität des erneut erhitzten UHT-behandelten Produktes liegt.

4. UHT-behandeltes Produkt nach einem der Ansprüche 1 bis 3, **dadurch gekennzeichnet, daß** das Produkt aus der Gruppe ausgewählt ist, bestehend aus UHT-behandelten Soßen, Suppen, flüssigen Desserts, Dressings und Füllungen.

5. UHT-behandeltes Produkt nach Anspruch 4, das eine UHT-behandelte weiße Soße ist, **dadurch gekennzeichnet, daß**
a) sie 2 bis 5 Gew.-% stabilisiertes Stärke-n-alkenylsuccinat, bevorzugt 3 bis 4 Gew.-% stabilisiertes Stärke-n-alkenylsuccinat, umfaßt,
b) ihre Viskosität nach der UHT-Behandlung unter 1.500 mPa·s, bevorzugt unter 1.000 mPa·s liegt,
c) sich ihre Viskosität nach der erneuten Erhitzung auf über 2.000 mPa·s, bevorzugt über 2.200 mPa·s, erhöht.

6. Verfahren zur Herstellung eines UHT-behandelten Produktes, umfassend Stärke-n-alkenylsuccinat, stabilisiert durch die Behandlung mit Aktivchlor, wobei das Verfahren die folgenden Schritte umfaßt:
a) Herstellen der Mischung aus den Inhaltsstoffen,
b) Vorerhitzen der Mischung auf eine Temperatur von höher als 50 °C, bevorzugt auf eine Temperatur von bis zu 75 °C,
c) Homogenisieren der vorerhitzten Mischung bei einem Druck von höher als 20 bar,
d) Behandeln der Mischung durch UHT bei einer Temperatur von höher als 120 °C und
e) Abkühlen des UHT-behandelten Produktes.

7. Verfahren nach Anspruch 6, **dadurch gekennzeichnet, daß** das UHT-behandelte Produkt von Schritt e) auf eine Temperatur von höher als 80 °C, bevorzugt höher als 90 °C, erneut erhitzt wird.

8. Verwendung von Stärke-n-alkenylsuccinat, stabilisiert durch die Behandlung mit Aktivchlor, als ein Texturierungsmittel in einem UHT-behandelten Produkt, und wobei die Viskosität des UHT-behandelten Produktes zwischen dem 0,10- und 0,50fachen der Viskosität des erneut erhitzten UHT-behandelten Produktes liegt.

9. Verwendung nach Anspruch 8, **dadurch gekennzeichnet, daß** das UHT-behandelte Produkt aus der Gruppe ausgewählt ist, bestehend aus Soßen, Suppen, flüssigen Desserts, Dressings und Füllungen.

## Revendications

1. Produit traité UHT comprenant un n-alkényl succinate d'amidon en tant qu'agent de texture **caractérisé en ce que** ledit n-alkényl succinate d'amidon est un n-alkényl succinate d'amidon stabilisé par un traitement avec du chlore actif et la viscosité dudit produit traité UHT est entre 0,10 et 0,50 fois la viscosité du produit traité UHT réchauffé.

2. Produit traité UHT selon la revendication 1, **caractérisé en ce que** la viscosité dudit produit traité UHT est entre 0,15 et 0,40 fois la viscosité du produit traité UHT réchauffé.

3. Produit traité UHT selon la revendication 1, **caractérisé en ce que** la viscosité dudit produit traité UHT est entre 0,15 et 0,35 fois la viscosité du produit traité UHT réchauffé.

4. Produit traité UHT selon l'une des revendications 1 à 3, **caractérisé en ce que** ledit produit est sélectionné dans le groupe constitué de sauces, de soupes, de desserts liquides, d'assaisonnements et de garnitures traités UHT.

5. Produit traité UHT selon la revendication 4, qui est une sauce blanche traitée UHT **caractérisée en ce que** :
a) elle comprend 2 à 5% en poids de n-alkényl succinate d'amidon stabilisé, de préférence de 3 à 4% en poids de n-alkényl succinate d'amidon stabilisé,
b) sa viscosité après traitement UHT est inférieure à 1500 mPa.s, de préférence inférieure à 1000 mPa.s,
c) sa viscosité après réchauffage augmente à plus de 2000 mPa.s, de préférence à plus de 2200 mPa.s.

6. Procédé de préparation d'un produit traité UHT comprenant un n-alkényl succinate d'amidon stabilisé par un traitement avec du chlore actif, ce procédé comprenant les étapes suivantes :
a) préparation du mélange des ingrédients,
b) préchauffage dudit mélange à une température supérieure à 50°C, de préférence à une température jusqu'à 75°C,
c) homogénéisation dudit mélange préchauffé à une pression supérieure à 20 bars,
d) traitement UHT du mélange à une température supérieure à 120°C, et
e) refroidissement du produit traité UHT.

7. Procédé selon la revendication 6, **caractérisé en ce que** le produit traité UHT de l'étape e) est réchauffé à une température supérieure à 80°C, de préférence supérieure à 90°C.

8. Utilisation d'un n-alkényl succinate d'amidon stabilisé par un traitement avec du chlore actif en tant qu'agent de texture dans un produit traité UHT et **caractérisé en ce que** la viscosité du produit traité UHT est entre 0,10 et 0,50 fois la viscosité du produit traité UHT réchauffé.

9. Utilisation selon la revendication 8, **caractérisée en ce que** ledit produit traité UHT est sélectionné dans le groupe constitué de sauces, de soupes, de desserts liquides, d'assaisonnements et de garnitures.
